(19) Europäisches Patentamt
European Patent Office
Office européen des brevets

(11) **EP 4 109 126 B1**

(12) **EUROPEAN PATENT SPECIFICATION**

(45) Date of publication and mention
of the grant of the patent:
**28.02.2024   Bulletin 2024/09**

(21) Application number: **21181322.5**

(22) Date of filing: **24.06.2021**

(51) International Patent Classification (IPC):
**G01S 7/48** *(2006.01)*       **G01S 7/4861** *(2020.01)*
**G01S 7/4913** *(2020.01)*       **G01J 3/50** *(2006.01)*

(52) Cooperative Patent Classification (CPC):
**G01S 7/4802; G01J 3/50; G01S 7/4861;**
**G01S 7/4913;** G01S 17/894

(54) **METHOD AND APPARATUS FOR DETECTING A COLOR OF LIGHT RECEIVED FROM A SCENE BY A TIME-OF-FLIGHT SENSOR**

VERFAHREN UND VORRICHTUNG ZUR ERFASSUNG EINER VON EINER SZENE DURCH EINEN FLUGZEITSENSOR EMPFANGENEN LICHTFARBE

PROCÉDÉ ET APPAREIL POUR DÉTECTER UNE COULEUR DE LA LUMIÈRE DANS UNE SCÈNE AU MOYEN D'UN CAPTEUR DE DURÉE DE VOL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.12.2022   Bulletin 2022/52**

(73) Proprietor: **Infineon Technologies AG**
**85579 Neubiberg (DE)**

(72) Inventors:
• **KRELL, Sebastian**
**8010 Graz (AT)**
• **SCHOENLIEB, Armin Josef**
**8054 Seiersberg-Pirka (AT)**
• **KARACA, Timucin**
**8101 Gratkorn (AT)**

(74) Representative: **2SPL Patentanwälte PartG mbB**
**Landaubogen 3**
**81373 München (DE)**

(56) References cited:
**US-A1- 2006 128 087     US-A1- 2018 115 767**
**US-A1- 2019 349 536**

## Description

### Field

The present disclosure relates to color sensing with Time-of-Flight (ToF) sensors. In particular, examples relate to a method and an apparatus for detecting a color of light received from a scene by a ToF sensor.

### Background

Color information is used for object segmentation in images of a ToF camera. An RGB camera is conventionally used together with the ToF camera to provide the color information. The images of the ToF camera and the RGB camera have a different angle to the observed scene such that synchronization between both cameras is needed. The combination of the ToF camera and the RGB camera causes high system costs and high system complexity.

Document US 2006/128087 A1 relates to methods and devices for three-dimensional and color sensing. Document US 2018/115767 A1 relates to a circuitry for ToF sensing. Further, document US 2019/349536 A1 relates to a depth and multi-spectral camera.

There may be a demand for alternative techniques for color sensing with ToF sensors.

### Summary

The demand is satisfied by the subject matter of the independent claims. Preferred embodiments are given in the dependent claims.

An example relates to a method for detecting a color of light received from a scene by a ToF sensor. The method comprises applying a first electrical potential to a first modulation gate of a sensor pixel of the ToF sensor during a plurality of exposure times of the ToF sensor. A value of the first electrical potential is equal for the plurality of exposure times. Further, the method comprises applying a second electrical potential to a second modulation gate of the sensor pixel during the plurality of exposure times. A value of the second electrical potential is different for each of the plurality of exposure times. The second electrical potential is different from the first electrical potential. In addition, the method includes receiving data indicating a respective first amount of charge collected at a first charge storage of the sensor pixel during the plurality of exposure times and a respective second amount of charge collected at a second charge storage of the sensor pixel during the plurality of exposure times. The method further comprises determining for the plurality of exposure times a respective ratio value representing a ratio of the respective first amount of charge to the respective second amount of charge. Additionally, the method comprises determining a slope of a course of the determined ratio values with respect to the values of the second electrical potential used for the plurality of exposure times. Still further, the method comprises determining the color of the light received by the sensor pixel based on the slope.

Another example relates to an apparatus for detecting a color of light received from a scene by a ToF sensor. The apparatus comprises driver circuitry configured to apply a first electrical potential to a first modulation gate of a sensor pixel of the ToF sensor during a plurality of exposure times of the ToF sensor. A value of the first electrical potential is equal for the plurality of exposure times. Further, the driver circuitry is configured to apply a second electrical potential to a second modulation gate of the sensor pixel during the plurality of exposure times. A value of the second electrical potential is different for each of the plurality of exposure times. The second electrical potential is different from the first electrical potential. The apparatus additionally comprises processing circuitry configured to receive data indicating a respective first amount of charge collected at a first charge storage of the sensor pixel during the plurality of exposure times and a respective second amount of charge collected at a second charge storage of the sensor pixel during the plurality of exposure times. The processing circuitry is further configured to determine for the plurality of exposure times a respective ratio value representing a ratio of the respective first amount of charge to the respective second amount of charge. Additionally, the processing circuitry is configured to determine a slope of a course of the determined ratio values with respect to the values of the second electrical potential used for the plurality of exposure times. Still further, the processing circuitry is configured to determine the color of the light received by the sensor pixel based on the slope.

### Brief description of the Figures

Some examples of apparatuses and/or methods will be described in the following by way of example only, and with reference to the accompanying figures, in which

Fig. 1    illustrates a flowchart of an example according to the invention of a method for detecting a color of light received from a scene by a ToF sensor;

Fig. 2    illustrates an example according to the invention of ToF sensor together with an apparatus for detecting a color of light received from a scene by the ToF sensor;

Fig. 3    illustrates exemplary courses of charges collected at charge storages of a ToF sensor;
Fig. 4    illustrates an exemplary color spectrum;
Fig. 5    illustrates exemplary courses of charges collected at charge storages of a ToF sensor;
Fig. 6    illustrates another exemplary color spectrum; and
Fig. 7    illustrates according to the invention exemplary courses of charges collected at charge storages of a ToF sensor

## Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

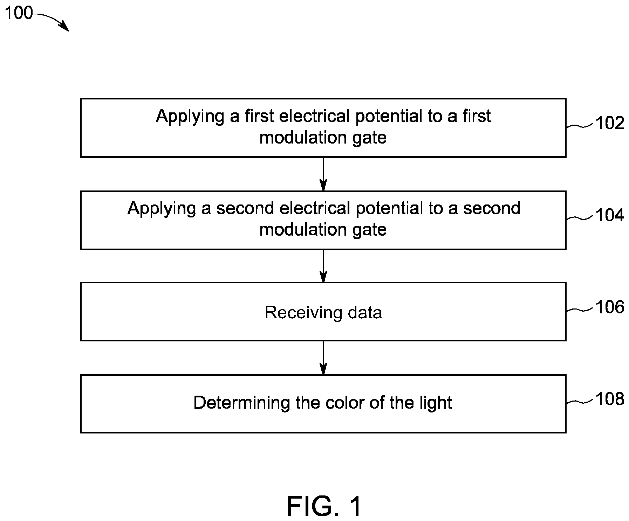

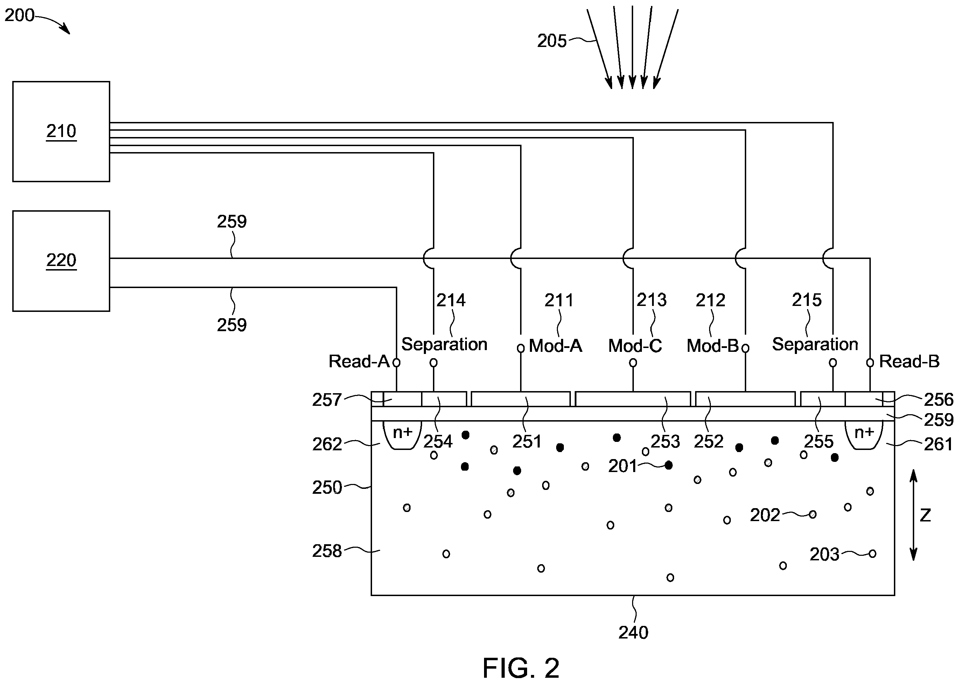

Fig. 1 illustrates a flowchart of an example according to the invention of a method 100 for detecting a color of light received from a scene by a ToF sensor. The method 100 will be described in the following further with reference to **Fig. 2** which illustrates according to the invention an exemplary ToF sensor 240 together with an apparatus 200 for detecting a color of light 205 received from a scene by the ToF sensor 240. Contrary to conventional ToF measurements, the scene is not actively illuminated for detecting the color of received light 205.

Fig. 2 illustrates a sectional view of a sensor pixel 250 of the ToF sensor 240 along a thickness direction z of the ToF sensor 240. The ToF sensor 240 may comprise one or more additional sensor pixels that are analogous to the sensor pixel 250 illustrated in Fig. 2 and described in the following.

The sensor pixel 250, i.e., ToF sensor 240, comprises a semiconductor material/substrate (e.g. silicon) 258. The received light 205 penetrates the semiconductor material 258 along the thickness direction z with different depth. In particular, the penetration depth of the light 205 depends on the wavelength of the light 205. The longer the wavelength of the light 205, the deeper the light is able to penetrate the ToF sensor 240.

The penetration depth of blue light is rather low such that the blue light is substantially completely absorbed in the upper part of the semiconductor material 258. This is illustrated in Fig. 2 by means of the charge carriers (e.g. electrons or holes) 201 generated in the semiconductor material 258 by the blue light. The charge carriers 201 only occur in the upper part of the semiconductor material 258. Green light can penetrate the semiconductor material 258 deeper than blue light. This is illustrated in Fig. 2 by means of the charge carriers 202 generated in the semiconductor material 258 by the green light. The charge carriers 202 occur from the upper to the middle part of the semiconductor material 258. Red light can penetrate the semiconductor material 258 deepest. This is illustrated in Fig. 2 by means of the charge carriers 203 generated in the semiconductor material 258 by the red light. The charge carriers 203 are generated in the semiconductor material 258 from the upper part of the sensor pixel 250 to deep areas at the lower part of the sensor pixel 250.

The wavelength-dependent penetration depth of the light 205 allows to determine the color of the light 205. In particular, the electric field within the sensor pixel 250 may be shaped such that the charge carriers generated by the wavelength components of the light 205 may be separated. The electric field within the sensor pixel 250 depends on the potentials applied to modulation gates (modulation gate terminals) of the sensor pixel 250. In the example of Fig. 2, the sensor pixel 250 comprises three modulation gates (modulation gate terminals) 251, 252 and 253. It is to be noted that the present disclosure is not limited thereto. In other examples, the sensor pixel 250 may comprise only two modulation gates (e.g. the modulation gate 253 may be omitted). In still other examples, the sensor pixel 250 may comprise more than three modulation gates. In other words, a sensor pixel according to the present disclosure comprises at least two modulation gates.

The sensor pixel 250 may optionally comprise further terminals such as the separation terminals 254 and 255 illustrated in Fig. 2 for separating the modulation gates 251, 252 and 253 from readout terminals 256 and 257 of the pixel sensor 250.

The modulation gates 251, 252 and 253 are isolated from the semiconductor material 258 by an isolation layer (e.g. a thin oxide layer) 259. As described above, the movement of generated charge carriers is controlled by the signals applied to the modulation gates 251, 252 and 253 during an exposure time of the ToF sensor. Accordingly, a transport of the generated charged carriers to the left or to the right side of the sensor pixel 250 may be influenced.

The method 100 comprises applying 102 a first electrical potential 211 to the first modulation gate 251 during a (single) exposure time of the ToF sensor 240. Additionally, the method 100 comprises applying 104 a second electrical potential 212 to the second modulation gate 252 during the exposure time. The apparatus 200 comprises driver circuitry 210 coupled to the first modulation gate 251 as well as the second modulation gate 252 and configured to apply the respective electrical potential. The first electrical potential 211 and the second electrical potential 212 may be constant potentials. Further, the first electrical potential 211 and the second electrical potential 212 may be continuously applied to the respective one of the first modulation gate 251 and the second modulation gate 252 during the exposure time.

Similarly, the driver circuitry 210 may be configured to apply a third electrical potential 213 to the third modulation gate 253. As the third modulation gate 253 is arranged between the first modulation gate 251 and the second modulation gate 252 along a lateral extension of the sensor pixel 250, the third electrical potential 213 is between the first electrical potential 211 and the second electrical potential 212. In other words, the third electrical potential 213 is an intermediate potential.

For example, if the first electrical potential 211 is higher than the second electrical potential 212, generated electrons may substantially travel to the right side of the sensor pixel 250 and accumulate near the readout terminal 257. Only a few generated electrons may travel to the left side of the sensor pixel 250 and accumulate near the readout terminal 256. Readout diodes 261 and 262 serving as charge storages for the generated charge carriers are formed by the n+ (i.e. highly n-doped) regions below the readout terminals 256 and 257. The readout terminals 256 and 257 are coupled to a respective one of the readout diodes 261 and 262 serving as charge storages. In other words, the readout terminal 256 is coupled to a first charge storage formed by the readout diode 261, whereas the readout terminal 257 is coupled to a second charge storage formed by the readout diode 262. It is to be noted that instead of n+ regions in a p-doped semiconductor material 258, p+ regions in an n-doped semiconductor material 258 may be used alternatively.

Accordingly, the readout signal provided by the readout terminal 256 indicates a first amount of charge collected at the first charge storage of the sensor pixel 250 during the exposure time. Similarly, the readout signal provided by the readout terminal 257 indicates a second amount of charge collected at the second charge storage of the sensor pixel 250 during the exposure time.

The readout terminals 256 and 257 are directly coupled to processing circuitry 220 of the apparatus 200 in the example of Fig. 2 such that the processing circuitry 220 receives readout signals from the readout terminals 256 and 257. However, the present disclosure is not limited thereto. In other examples, the readout signals provided by the readout terminals 256 and 257 may first be pre-processed within the ToF sensor 240. Accordingly, various types and numbers of signals may be provided from the ToF sensor 240 to the processing circuitry 220 for informing the processing circuitry 220 about the charges collected at the charge storages of the sensor pixel 250 during the exposure time. In general, the processing circuitry 220 is configured to receive data 259 (e.g. encoded to one or more signals) indicating the first amount of charge collected at the first charge storage of the sensor pixel 250 during the exposure time and the second amount of charge collected at the second charge storage of the sensor pixel 250 during the exposure time. Analogously, the method 100 comprises receiving 106 data indicating the first amount of charge collected at the first charge storage of the sensor pixel 250 during the exposure time and the second amount of charge collected at the second charge storage of the sensor pixel 250 during the exposure time.

In the example of Fig. 2, the processing circuitry 220 is illustrates as separate circuitry external to the ToF sensor 240. However, it is to be noted that the present disclosure is not limited thereto. In alternative examples, the ToF sensor 240 may comprise the processing circuitry 220. In other words, the processing circuitry 220 may be an integral part of the ToF sensor 240 such that the data 259 are processed within the ToF sensor 240.

The first amount of charge collected at the first charge storage of the sensor pixel 250 compared to the second amount of charge collected at the second charge storage of the sensor pixel 240 during the exposure time depends on the color of the received light 205 due to the wavelength-dependent penetration depth of the light 205.

Accordingly, the method 100 comprises determining 108 the color of the light 205 received by the sensor pixel 240 based on the first amount of charge and the second amount of charge. The processing circuitry 220 is accordingly configured to determine the color of the light 205 received by the sensor pixel 240 based on the first amount of charge and the second amount of charge.

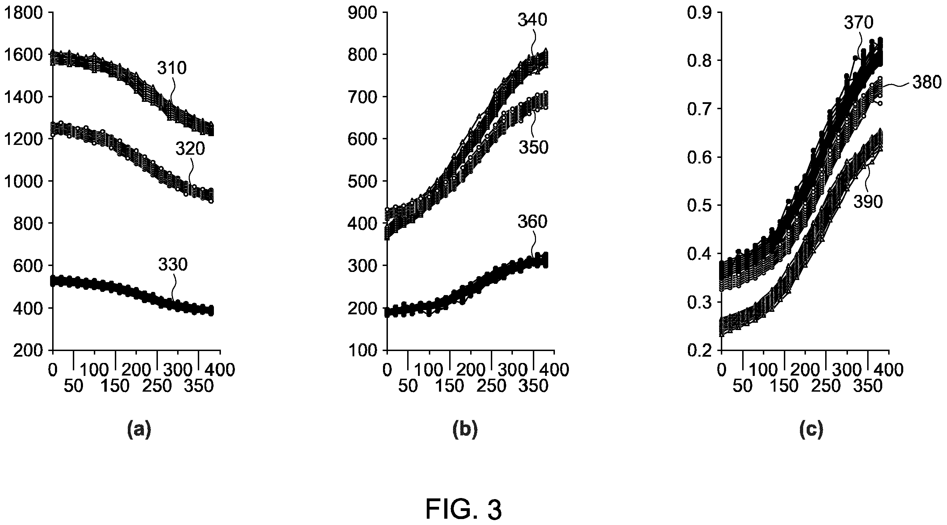

Fig. 3 exemplarily illustrates how the first amount of charge and the second amount of charge depend on the wavelength of the light 205. The abscissa in each of subfigures (a) to (c) of Fig. 3 denotes the value of the first electrical potential 211 used during the exposure time of the ToF sensor 240 in arbitrary units. The first electrical potential 211 is higher than the second electrical potential 212 in the example of Fig. 3 and not changed. In other words, the second electrical potential 212 is the same for each data point in the example of Fig. 3.

Fig. 3 illustrates in subfigure (a) the respective first amount of charge collected at the first charge storage (i.e. the readout diode 261) of the sensor pixel 250 for different colors of the received light 205 and for the different values of the first electrical potential 211. The ordinate denotes the first amount of charge in arbitrary units. The curve 310 represents the respective first amount of charge collected at the first charge storage of the sensor pixel 250 for red light. The curve 320 represents the respective first amount of charge collected at the first charge storage of the sensor pixel 250 for green light. The curve 330 represents the respective first amount of charge collected at the first charge storage of the sensor pixel 250 for blue light. As can be seen from subfigure (a), the first amount of charge collected at the first charge storage is different for red, green and blue light. Further, subfigure (a) illustrates that the first amount of charge decreases if the value of the first electrical potential 211 is increased. When comparing the curves 310, 320 and 330, it is evident that the degree of change depends on the color of the received light 205.

Subfigure (b) of Fig. 3 illustrates the respective second amount of charge collected at the second charge storage (i.e. the readout diode 262) of the sensor pixel 250 for the different colors of the received light 205 and for the different values of the first electrical potential 211. The ordinate denotes the second amount of charge in arbitrary units. The curve 340 represents the respective second amount of charge collected at the second charge storage of the sensor pixel 250 for the red light. The curve 350 represents the respective second amount of charge collected at the second charge storage of the sensor pixel 250 for the green light. The curve 360 represents the respective second amount of charge collected at second first charge storage of the sensor pixel 250 for the blue light. As can be seen from subfigure (b), the second amount of charge collected at the second charge storage is different for red, green and blue light.

Further, subfigure (b) illustrates that the second amount of charge increases if the value of the first electrical potential 211 is increased. When comparing the curves 340, 350 and 360, it is evident that the degree of change depends on the color of the received light 205.

When comparing the corresponding curves in subfigures (a) and (b), it is evident that the respective second amount of charge is significantly smaller than the respective first amount of charge for each of the colors. As the first electrical potential 211 is higher than the second potential 212, most electrons generated by the received light 205 in the semiconductor material 258 of the sensor pixel 250 travel to the readout diode 261 at the right side and are, hence, collected in the first charge storage. A comparatively small amount of the generated electrons travels to the readout diode 262 at the left side and is, hence, collected in the second charge storage.

Fig. 3 illustrates in subfigure (c) the respective ratio of the first amount of charge to the second amount of charge for the different values of the first electrical potential 211. The ordinate denotes the respective ratio value. The curve 370 represents the respective ratio of the first amount of charge to the second amount of charge for the blue light. The curve 380 represents the respective ratio of the first amount of charge to the second amount of charge for the green light. The curve 390 represents the respective ratio of the first amount of charge to the second amount of charge for the red light.

As can be seen from subfigure (c), the ratio of the first amount of charge to the second amount of charge increases for each of the colors if the value of the first electrical potential 211 is increased. However, the relation between the ratios for the different colors stay substantially constant irrespective of the value of the first electrical potential 211. As illustrated in Fig. 3, the ratio of the first amount of charge to the second amount of charge is higher for blue light than for green light irrespective of the value of the first electrical potential 211. Similarly, the ratio of the first amount of charge to the second amount of charge is higher for green light than for red light irrespective of the value of the first electrical potential 211.

This behavior of the ratio of the first amount of charge to the second amount of charge allows to determine the color of the light 205.

Determining 108 the color of the light 205 received by the sensor pixel 250 may, hence, comprise determining a ratio value (e.g. as illustrated in subfigure (c) of Fig. 3) representing a ratio of the first amount of charge (e.g. as illustrated in subfigure (a) of Fig. 3) to the second amount of charge (e.g. as illustrated in subfigure (b) of Fig. 3). Further, the determining 108 the color of the light 205 received by the sensor pixel 250 may comprise determining the color of the light 205 received by the sensor pixel 250 based on the ratio value as the ratio value is characteristic for the color of the light 205. In other words, the information stored in the charge storage elements of the sensor pixel 250 is sampled. The sampled values are divided. The ratio of these values indicates the sensed color. The ratio may be fitted to a color scale as will be described in the following.

As can be seen from Fig. 3, the ratio of the first amount of charge to the second amount of charge is within a certain value range for each color and for each value of the first electrical potential 211. This may be used for determining the color of the light 205.

For example, determining 108 the color of the light received by the sensor pixel based on the ratio value may comprise determining which of a plurality of value ranges includes the ratio value representing the ratio of the first amount of charge to the second amount of charge. Each of the value ranges represents a possible color of the light received by the sensor pixel such as red, green or blue. Accordingly, the possible color represented by the one of the plurality of value ranges which includes the ratio value may be determined as the color of the light received by the sensor pixel.

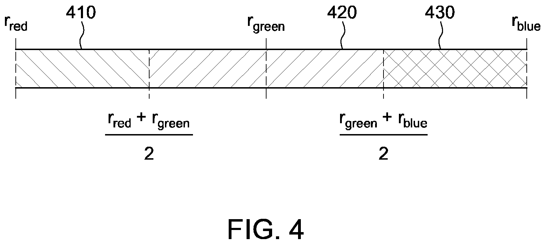

This is exemplarily illustrated in **Fig. 4** illustrating three value ranges 410, 420 and 420 used for mapping the ratio value $r_{rat}$ to an exemplary color spectrum which comprises three colors. The value range 410 represents red, the value range 420 represents green and the value range 410 represents blue.

The value range 410 is bounded by the values $r_{red}$ and $\frac{r_{red} + r_{green}}{2}$. The value range 420 is bounded by the values $\frac{r_{red} + r_{green}}{2}$ and $\frac{r_{green} + r_{blue}}{2}$. The value range 420 is bounded by the values $\frac{r_{green} + r_{blue}}{2}$ and $r_{blue}$.

The classification of the ratio value $r_{rat}$ may be done as follows:

$$R = \begin{cases} 1 \ if \ r_{red} < r_{rat} < \frac{r_{red} + r_{green}}{2} \\ 0 \ else \end{cases} \qquad (1)$$

$$G = \begin{cases} 1 \ if \ \frac{r_{red} + r_{green}}{2} < r_{rat} < \frac{r_{green} + r_{blue}}{2} \\ 0 \ else \end{cases} \qquad (2)$$

$$B = \begin{cases} 1 \ if \ \frac{r_{green} + r_{blue}}{2} < r_{rat} < r_{blue} \\ 0 \ else \end{cases} \qquad (3)$$

1 denotes in mathematical expressions (1) to (3) that the ratio value $r_{rat}$ is within the respective value range and that the color of the received light 205 is, hence, the possible color represented by the respective value range. 0 denotes in mathematical expressions (1) to (3) that the ratio value $r_{rat}$ is not within the value range and that the color of the received light 205 is, hence, not the possible color represented by the respective value range. In other words, the ratio value $r_{rat}$ is fitted to a color space by means of a threshold comparison.

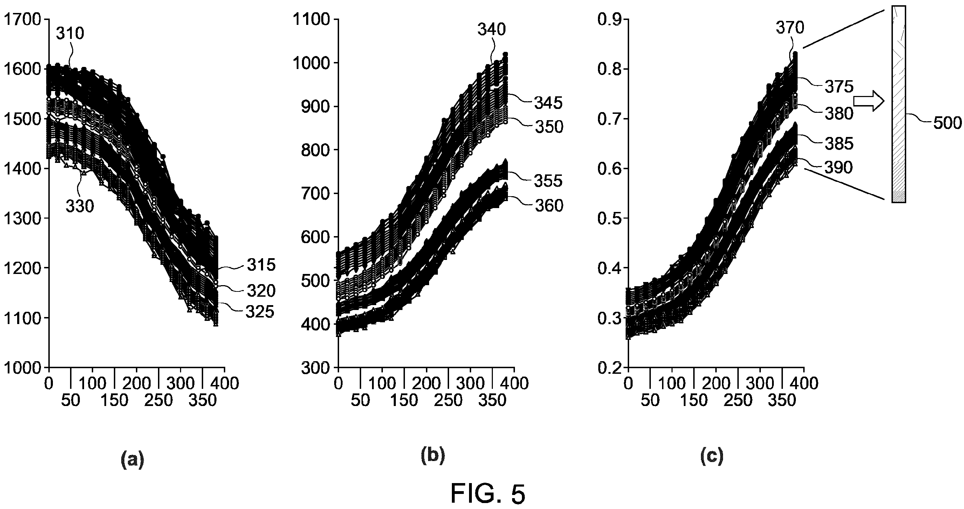

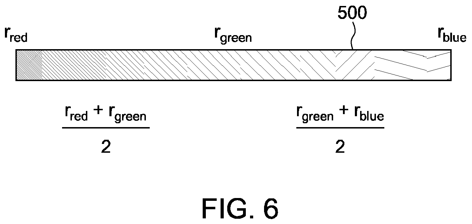

However, it is to be noted that the value ranges of Fig. 4 are merely exemplary. More or less value ranges may be used to decrease or increase the granularity of the color mapping. This is exemplarily illustrated in Figs. 5 and 6. **Fig. 5** illustrates similarly to Fig. 3 in its subfigure (a) the respective first amount of charge collected at the first charge storage (i.e. the readout diode 261) of the sensor pixel 250 for different colors of the received light 205 and for the different values of the first electrical potential 211. In addition to the curves 310, 320 and 330 for blue, green and red, subfigure (a) of Fig. 5 further illustrates the curves 315 and 325 for cyan and yellow. Further, Fig. 5 illustrates similarly to Fig. 3 in its subfigure (b) the respective second amount of charge collected at the second charge storage (i.e. the readout diode 262) of the sensor pixel 250 for the different colors of the received light 205 and for the different values of the first electrical potential 211. In addition to the curves 340, 350 and 360 for blue, green and red, subfigure (b) of Fig. 5 further illustrates the curves 345 and 355 for cyan and yellow. Still further, Fig. 5 illustrates similarly to Fig. 3 in its subfigure (c) the respective ratio of the first amount of charge to the second amount of charge. In addition to the curves 370, 380 and 390 for blue, green and red, subfigure (c) of Fig. 5 further illustrates the curves 375 and 385 for cyan and yellow.

Further illustrated in Fig. 5 is a gray scale representation of a color spectrum 500 to which the determined ratio value may be mapped. **Fig. 6** illustrates the gray scale representation of the color spectrum 500 with more details. In comparison to the example of Fig. 4, the color spectrum 500 comprises not only red, green and blue but also gradations, i.e. mixtures of red, green and blue. As a reference the values $r_{red}$, $\frac{r_{red} + r_{green}}{2}$, $r_{green}$, $\frac{r_{green} + r_{blue}}{2}$ and $r_{blue}$ are again illustrated in Fig. 6. For example, value ranges for red, orange, yellow, green, cyan and blue may be defined and used for the comparison such that the color of the received light 205 may be determined with higher granularity.

Alternatively, reference values representing a respective possible color of the receive light 205 may be defined and used instead of the value ranges. For example, reference values may be defined for different shades/tones of red, orange, yellow, green, blue etc. Accordingly, determining 108 the color of the light received by the sensor pixel based on the ratio value may comprise comparing the ratio value to a plurality of reference values. As described above, each of the reference values represents a possible color of the light 205 received by the sensor pixel 250. The possible color represented by the one of the plurality of reference values that best matches the ratio value may be determined as the color of the light 205 received by the sensor pixel 250. For example, the respective difference between the ratio value and each of the reference values may be determined and the possible color represented by the reference value exhibiting the smallest difference to the ratio value may be determined as the color of the received light 205.

In other examples, a plurality of primary colors (e.g. red, green and blue) may be mixed, wherein the mixing ratios are determined based on the ratio value. This may allow a more complex color mapping. Accordingly, determining 108 the color of the light 205 received by the sensor pixel 250 may comprise determining weights for a plurality of primary colors of a color space based on the ratio value and combining the plurality of primary colors using the weights for obtaining the color of the received light 205. The weights determine (describe) the intensities of the primary colors such that the color of the received light 205 is a mixture of the intensities of the primary colors.

For example, if red, green and blue are the primary colors of an exemplary color space, they may be combined as follows for obtaining the color $C$ of the received light 205:

$$C(R, G, B) = w_{red} \cdot R + w_{green} \cdot G + w_{blue} \cdot B \qquad (4)$$

with $R$ denoting red, $w_{red}$ denoting the weight for red, $G$ denoting green, $w_{green}$ denoting the weight for green, $B$ denoting blue and $w_{blue}$ denoting the weight for blue.

The weights $w_{red}$, $w_{green}$ and $w_{blue}$ depend on the ratio value $r_{rat}$. This may be expressed as follows:

$$f_{map} : r_{rat} \rightarrow \begin{cases} w_{red} \\ w_{green} \\ w_{green} \end{cases} \qquad (5)$$

with $f_{map}$ denoting a mapping function used for determining the weights $w_{red}$, $w_{green}$ and $w_{blue}$ for the primary colors red, green and blue of the color space based on the ratio value $r_{rat}$.

For example, similar to the example of Fig. 4, the weights $w_{red}$, $w_{green}$ and $w_{blue}$ may be set either to 0 or 1 depending on the ratio value $r_{rat}$:

$$w_{red} = \begin{cases} 1 \ if \ r_{red} < r_{rat} < \frac{r_{red} + r_{green}}{2} \\ 0 \ else \end{cases} \qquad (6)$$

$$w_{green} = \begin{cases} 1 \ if \ \frac{r_{red} + r_{green}}{2} < r_{rat} < \frac{r_{green} + r_{blue}}{2} \\ 0 \ else \end{cases} \qquad (7)$$

$$w_{blue} = \begin{cases} 1 \ if \ \frac{r_{green} + r_{blue}}{2} < r_{rat} < r_{blue} \\ 0 \ else \end{cases} \qquad (8)$$

In other examples, a color space such as the RGB color space may be represented using intermediate colors (e.g. yellow, cyan, etc.) by adjusting the weights to create mixed results. In the following example, the intermediate colors yellow and cyan are used for the RGB color space:

$$r_{yellow} = \frac{r_{red} + r_{green}}{2} \qquad (9)$$

$$r_{cyan} = \frac{r_{green} + r_{blue}}{2} \qquad (10)$$

In this examples, the weights $w_{red}$, $w_{green}$ and $w_{blue}$ are set as follows depending on the ratio value $r_{rat}$:

$$w_{red} = \begin{cases} 1 \; if \; r_{red} < r_{rat} < r_{yellow} \\ 1 - \frac{r_{rat} - r_{yellow}}{r_{green} - r_{yellow}} \quad if \; r_{yellow} < r_{rat} < r_{green} \\ 0 \; else \end{cases} \quad (11)$$

$$w_{green} = \begin{cases} \frac{r_{rat} - r_{red}}{r_{yellow} - r_{red}} \; if \; r_{red} < r_{rat} < r_{yellow} \\ 1 \; if \; r_{yellow} < r_{rat} < r_{cyan} \\ 1 - \frac{r_{rat} - r_{cyan}}{r_{blue} - r_{cyan}} \; if \; r_{cyan} < r_{rat} < r_{blue} \\ 0 \; else \end{cases} \quad (12)$$

$$w_{blue} = \begin{cases} \frac{r_{rat} - r_{green}}{r_{cyan} - r_{green}} \; if \; r_{green} < r_{rat} < r_{cyan} \\ 1 \; if \; r_{cyan} < r_{rat} < r_{blue} \\ 0 \; else \end{cases} \quad (13)$$

However, it is to be noted that the above examples are merely exemplary. More or less and/or different primary colors may be used. Similarly, the weighted primary colors may be combined differently.

The pixel structure of the ToF sensor 240 may be non-symmetric such that different offset errors may be introduced into the measurement. The offset error may be compensated by an additional measurement.

While during the first exposure for the first measurement, the first electrical potential 211 is applied to the first modulation gate 251 and the second electrical potential 212 is applied to the second modulation gate 252 as described above, the signals are switched during another second exposure time for a second measurement. In other words, the second electrical potential 212 is applied to the first modulation gate 251 during the second exposure time of the ToF sensor 240 and the first electrical potential 211 is applied to the second modulation gate 252. This is done by the driver circuitry 210.

Accordingly, the received data 259 indicates the first amount of charge collected at the first charge storage of the sensor pixel 240 during the first exposure time and the second amount of charge collected at the second charge storage of the sensor pixel 240 during the first exposure time and additionally a third amount of charge collected at the first charge storage of the sensor pixel 240 during the second exposure time and a fourth amount of charge collected at the second charge storage of the sensor pixel 240 during the second exposure time. In other words, two color measurements are performed. Using the difference between both measurements may allow to compensate for the offset error.

Accordingly, a first difference value representing a charge difference between the first amount of charge and the third amount of charge may be determined. Similarly, a second difference value representing a charge difference between the second amount of charge and the fourth amount of charge may be determined.

The ratio value $r_{rat}$ may accordingly represent the ratio of the first difference value $r_{diff1}$ to the second difference value $r_{diff2}$. In other words:

$$r_{rat} = \frac{r_{diff1}}{r_{diff2}} \quad (14)$$

The color of the light 205 received by the sensor pixel 240 may be determined based on the ratio value $r_{rat}$ analogously to what is described above.

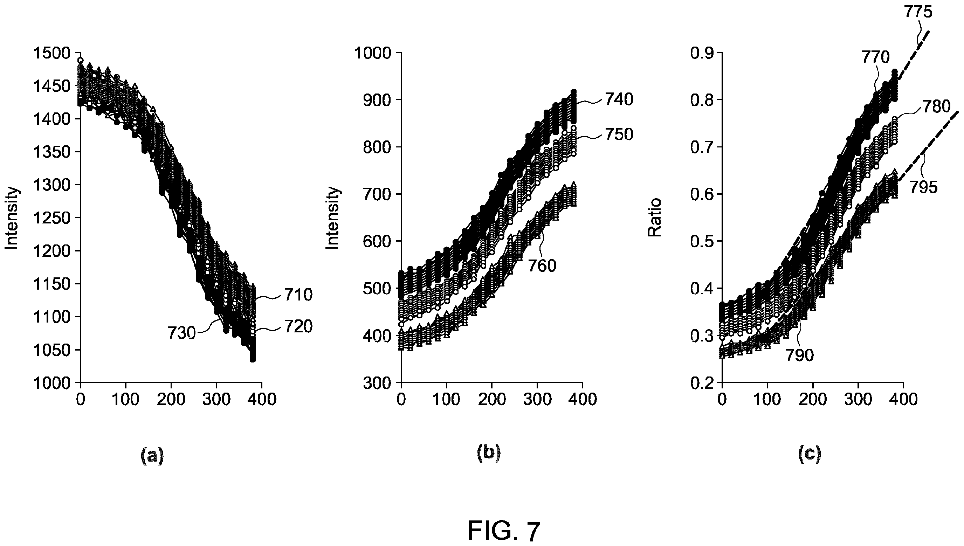

The above described mapping of the ratio value $r_{rat}$ to a color scale is not the only option for determining the color of the received light 205. A variety of classification/mapping schemes may be used. For example, the processing circuitry 220 may execute a classification/mapping algorithm for determining the color of the received light 205 based on at least the measured first amount of charge and the measured second amount of charge. An alternative approach for determining the color of the received light 205 will be described in the following with reference to **Fig. 7.** In the example according to the invention of Fig. 7, a plurality of measurements, i.e., a plurality of exposure times are used.

Similar to what is described above, the first electrical potential 211 is applied to the first modulation gate 251 and the second electrical potential 212 is applied to the second modulation gate 252 of the sensor pixel 250 during the plurality of exposure times of the ToF sensor 240. A value of the first electrical potential 211 is equal (i.e. the same, is not changed) for the plurality of exposure times. A value of the second electrical potential 212 is different for each of the plurality of exposure times. For example, the value of the second electrical potential 212 may be increased or decreased over the plurality of exposure times. In the example of Fig. 7, the value of the second electrical potential 212 is increased. The first electrical potential 211 is higher than the second electrical potential 212 in the example of Fig. 7.

Accordingly, the data 259 received indicate the respective first amount of charge collected at the first charge storage of the sensor pixel 250 and the respective second amount of charge collected at the second charge storage of the sensor pixel 250 for the plurality of exposure times. For example, the data 259 indicates the respective first amount of charge and the respective second amount of charge for each of the plurality of exposure times (e.g. three or more). This is illustrated in subfigures (a) and (b) of Fig. 7.

Fig. 7 illustrates similarly to Fig. 3 in its subfigure (a) the respective first amount of charge collected at the first charge storage (i.e. the readout diode 261) of the sensor pixel 250 for different colors of the received light 205 and for the different values of the second electrical potential 212. The curve 710 represents the respective first amount of charge collected at the first charge storage of the sensor pixel 250 for red light. The curve 720 represents the respective first amount of charge collected at the first charge storage of the sensor pixel 250 for green light. The curve 730 represents the respective first amount of charge collected at the first charge storage of the sensor pixel 250 for blue light.

Further, Fig. 7 illustrates similarly to Fig. 3 in its subfigure (b) the respective second amount of charge collected at the second charge storage (i.e. the readout diode 262) of the sensor pixel 250 for the different colors of the received light 205 and for the different values of the second electrical potential 212. The curve 740 represents the respective second amount of charge collected at the second charge storage of the sensor pixel 250 for the blue light. The curve 750 represents the respective second amount of charge collected at the second charge storage of the sensor pixel 250 for the green light. The curve 760 represents the respective second amount of charge collected at second first charge storage of the sensor pixel 250 for the red light.

Still further, Fig. 7 illustrates similarly to Fig. 3 in its subfigure (c) the respective ratio of the first amount of charge to the second amount of charge for the different values of the second electrical potential 212. The curve 770 represents the respective ratio of the first amount of charge to the second amount of charge for the blue light. The curve 780 represents the respective ratio of the first amount of charge to the second amount of charge for the green light. The curve 790 represents the respective ratio of the first amount of charge to the second amount of charge for the red light.

As can be seen from subfigure (c), the slopes of the curves 770, 780 and 790 are different from each other. This is exemplarily illustrated by the slopes 775 and 795 of the curves 770 and 790. The different slopes of the curves allow to determine the color of the received light 205.

Determining 108 the color of the light 205 received by the sensor pixel 250 may, hence, comprise determining for the plurality of exposure times a respective ratio value representing a ratio of the respective first amount of charge to the respective second amount of charge as described above and illustrated in subfigure (c) of Fig. 7.

Further, a slope (value) of a course of the determined ratio values with respect to the values of the second electrical potential used for the plurality of exposure times may be determined. In other words, the slope of a curve defined by a plurality of curve points is determined, wherein the curve points are each given by the determined ratio value and the value of the second electrical potential used for the respective exposure time of the plurality of exposure times. As illustrated in subfigure (c) of Fig. 7, the determined ratio values are plotted against the values of the second electrical potential used for the plurality of exposure times and a slope of the resulting curve is determined.

As the slope is color dependent, the color of the light 205 received by the sensor pixel 250 may be determined based on the slope (value). For example, it may be determined which of a plurality of value ranges includes the slope (value). Similar to what is described above, each of the value ranges may represent a possible color of the received light 205. Accordingly, the possible color represented by the one of the plurality of value ranges which includes the slope (value) may be determined as the color of the light 205 received by the sensor pixel 250. Alternatively, the slope (value) may be compared to a plurality of reference slopes (slope values). Similar to what is described above, each of the reference slopes (slope values) represents a possible color of the light received by the sensor pixel. The possible color represented by the one of the plurality of reference slopes (slope values) that best matches the slope (value) may be determined as the color of the light 205 received by the sensor pixel 250. For example, the respective difference between the slope (value) and each of the reference slopes (slope values) may be determined and the possible color represented by the reference slopes (slope values) exhibiting the smallest difference to the slope (value) may be determined as the color of the received light 205.

The above described value ranges, reference values, reference slopes or mapping functions may be determined based on calibration measurements with the ToF sensor 240. According to examples, at least one of the plurality of value ranges, at least one of the plurality of reference values, a mapping function used for determining the weights for the plurality of primary colors of the color space based on the ratio value or at least one reference slope used for determining the color of the light received by the sensor pixel based on the slope may be determined based on at least one calibration measurement in which the ToF sensor receives predetermined monochromatic light.

For example, the values $r_{red}$, $r_{green}$ and $r_{blue}$ used in the example of Figs. 3 and 4 may be determined as follows:

For determining $r_{red}$, the received light 205 may be predetermined red light in a first calibration measurement. Similar to what is described above, the first electrical potential is applied to the first modulation gate 251 of the sensor pixel 240 during an exposure time of the first calibration measurement. Analogously, the second electrical potential is applied to the second modulation gate 252 of the sensor pixel 240 during the exposure time of the first calibration measurement. The first amount of charge $C_{1,cal1}$ collected at the first charge storage of the sensor pixel 250 during the exposure time of the first calibration measurement and the second amount of charge $C_{2,cal1}$ collected at the second charge storage of the sensor pixel during 250 the exposure time of the first calibration measurement are determined and analyzed. The value $r_{red}$ is determined based on the ratio of the measurement amounts of charge as follows:

$$r_{red} = \frac{C_{1,cal1}}{C_{2,cal1}} \qquad (15)$$

Analogously, a second calibration measurement with predetermined green light may be performed for determining the value $r_{green}$:

$$r_{green} = \frac{C_{1,cal2}}{C_{2,cal2}} \qquad (16)$$

with $C_{1,cal2}$ and $C_{2,cal2}$ denoting the first and the second amount of charge collected at the respective one of the first charge storage and the second charge storage of the sensor pixel 250 during the exposure time of the second calibration measurement.

A third calibration measurement with predetermined blue light may be performed for determining the value $r_{blue}$:

$$r_{blue} = \frac{C_{1,cal3}}{C_{2,cal3}} \qquad (17)$$

with $C_{1,cal3}$ and $C_{2,cal3}$ denoting the first and the second amount of charge collected at the respective one of the first charge storage and the second charge storage of the sensor pixel 250 during the exposure time of the third calibration measurement.

While measuring a color and/or while performing a calibration measurement, the first electrical potential 211, the second electrical potential 212, the third potential 213, etc. may each be constant during the respective exposure time (i.e. the value of the respective electrical potential is constant / does not change during the respective exposure time). Further, the first electrical potential 211, the second electrical potential 212, the third potential 213, etc. may each be applied continuously during the (whole) respective exposure time.

In some examples, one of the first electrical potential 211 and the second electrical potential 212 is ground. The other one of the first electrical potential 211 and the second electrical potential 212 is different from ground. If more than two electrical potentials (e.g. third electrical potential 213) are used as the sensor pixel comprises more than two modulation gates, also the other electrical potentials are different from ground.

In other examples, each of the first electrical potential 211 and the second electrical potential 212 is different from ground. If more than two electrical potentials (e.g. third electrical potential 213) are used as the sensor pixel comprises more than two modulation gates, also the other electrical potentials are different from ground. Using only electrical potentials different from ground may allow to improve the separation of the charge carriers generated by the received light 205. For example, if the first electrical potential 211 is higher than the second electrical potential 212 and if the second electrical potential 212 is different from ground, more of the generated charge carriers (e.g. electrons or holes) may be sucked into the first charge storage formed by the readout diode 261 compared to a situation in which the second electrical potential 212 is equal to ground. For example, the first electrical potential 211 may be 0.7 V and the second electrical potential 212 may be 0.3 V.

It is to be noted that the first electrical potential 211 and the second electrical potential 212 need not be constant potentials. In some examples, a value the first electrical potential 211 may periodically and continuously alternate between a first value and a second value during a respective (single) exposure time of the ToF sensor 240 for the color measurement. In this example, also a value of the second electrical potential 212 may periodically and continuously alternate between the first value and the second value during the respective (single) exposure time of the ToF sensor 240 for the color measurement. Also during a calibration measurement, the values of the first electrical potential 211 and the second electrical potential 212 may alternate periodically and continuously. The values of the first electrical potential 211 and the second electrical potential 212 vary inversely between the first value and the second value. That is, when the value of the first electrical potential 211 changes from the first value to the second value, the value of the second electrical potential 212 changes from the second value to the first value, and vice versa. For example, the first value may be 0.7 V and the second value may be between 0 V (i.e. ground) and 0.4 V. In other words, two continuous wave signals (that oscillate between two signal levels/values) may be applied to the first and second modulation gates 251 and 252, wherein the two continuous wave signals are inverted with respect to each other. The third potential 213 applied to the third modulation gate 253 may be constant during the respective exposure time.

Applying two alternating electrical potentials to the modulation gates 251 and 252 of the sensor pixel 250 may allow to measure the "AC contrast" of the electrons within the sensor pixel 250, whereas applying constant electrical potentials to the modulation gates 251 and 252 of the sensor pixel 250 as described above may allow to measure the "DC contrast" of the electrons within the sensor pixel 250. Irrespective of whether the electrical potentials applied to the modulation gates 251 and 252 are constant or alternate, the charge carriers generated in the semiconductor material 258 of the sensor pixel 250 due to the received light 205 are separated due to the potential difference between the electrical potentials applied to the modulation gates 251 and 252.

The processing circuitry 220 may further output data indicative of the determined color. For example, a color coded image of the scene may be generated and output by the processing circuitry 220. The color coded image comprises one or more pixels, wherein one of one or more pixels represents the determined color of the light 205 received by the sensor pixel 250 of the ToF sensor 240. For example, if the ToF sensor 240 comprises a plurality of sensor pixels, the color coded image may comprise a plurality of pixels representing the determined colors of the light received by the plurality of sensor pixels of the ToF sensor 240.

In order to provide a uniform intensity among the pixels of the color coded image of the scene, the intensities of the individual pixels may be scaled based on the collected charges. For example, an intensity of the color coded image's pixel may be scaled on the sum of the first amount of charge and the second amount of charge as measured at the sensor pixel 240 for the exposure time.

The color coded image may be used for image segmentation of a depth image of the scene. For example, the ToF sensor 240 may be caused (controlled) to perform at least one ToF measurement of the scene for obtaining a depth image of the scene (e.g. by illuminating the scene with light based on an illumination signal and by driving the modulation gates of the sensor pixel 250 based on a modulated reference signal). Subsequently, an image segmentation process may be performed on the depth image for locating one or more objects and/or one or more boundaries in the depth image. The image segmentation process uses the color coded image of the scene for locating the one or more objects and/or the one or more boundaries in the depth image. The image segmentation using the color coded image of the scene may be done according to conventional techniques. Compared to conventional system architectures using a separate RGB camera for obtaining a color coded image of the scene, the proposed technique for the ToF sensor 240 may allow to capture the depth image and the color coded image with the same image sensor. Accordingly, the depth image and the color coded image are captured with the same angle relative to the scene. Hence, no additional efforts for synchronizing the depth image and the color coded image are needed. Compared to conventional system architectures using a separate RGB camera for obtaining a color coded image of the scene, the RGB camera is not needed such that system costs and system complexity may be reduced.

The examples as described herein may be summarized as follows:

Some examples relate to a method for detecting a color of light received from a scene by a ToF sensor. The method includes applying a first electrical potential to a first modulation gate of a sensor pixel of the ToF sensor during an exposure time of the ToF sensor. Further, the method includes applying a second electrical potential to a second modulation gate of the sensor pixel during the exposure time. The second electrical potential is different from the first electrical potential. In addition, the method includes receiving data indicating a first amount of charge collected at a first charge storage of the sensor pixel during the exposure time and a second amount of charge collected at a second charge storage of the sensor pixel during the exposure time. The method further includes determining the color of the light received by the sensor pixel based on the first amount of charge and the second amount of charge.

According to some examples, determining the color of the light received by the sensor pixel comprises: determining a ratio value representing a ratio of the first amount of charge to the second amount of charge; and determining the color of the light received by the sensor pixel based on the ratio value.

In alternative examples, the method further comprises: applying the second electrical potential to the first modulation gate during another exposure time of the ToF sensor; applying the first electrical potential to the second modulation gate during the other exposure time; and receiving data indicating a third amount of charge collected at the first charge storage during the other exposure time and a fourth amount of charge collected at the second charge storage during the other exposure time, wherein determining the color of the light received by the sensor pixel comprises: determining a first difference value representing a charge difference between the first amount of charge and the third amount of charge; determining a second difference value representing a charge difference between the second amount of charge and the fourth amount of charge; determining a ratio value representing a ratio of the first difference value to the second difference value; and determining the color of the light received by the sensor pixel based on the ratio value.

According to some examples, determining the color of the light received by the sensor pixel based on the ratio value comprises: determining which of a plurality of value ranges includes the ratio value, each of the value ranges representing a possible color of the light received by the sensor pixel; and determining the possible color represented by the one of the plurality of value ranges which includes the ratio value as the color of the light received by the sensor pixel.

In alternative examples, determining the color of the light received by the sensor pixel based on the ratio value comprises: comparing the ratio value to a plurality of reference values, each of the reference values representing a possible color of the light received by the sensor pixel; and determining the possible color represented by the one of the plurality of reference values that best matches the ratio value as the color of the light received by the sensor pixel.

In further alternative examples, determining the color of the light received by the sensor pixel based on the ratio value comprises: determining weights for a plurality of primary colors of a color space based on the ratio value; and combining the plurality of primary colors using the weights for obtaining the color of the light received by the sensor pixel.

In some examples, the first electrical potential is applied to the first modulation gate and the second electrical potential is applied to the second modulation gate during a plurality of exposure times of the ToF sensor, wherein a value of the first electrical potential is equal for the plurality of exposure times, wherein a value of the second electrical potential is different for each of the plurality of exposure times, wherein data are received indicating the respective first amount of charge and the respective second amount of charge for the plurality of exposure times, and wherein determining the color of the light received by the sensor pixel based on the first amount of charge and the second amount of charge comprises: determining for the plurality of exposure times a respective ratio value representing a ratio of the respective first amount of charge to the respective second amount of charge; determining a slope of a course of the determined ratio values with respect to the values of the second electrical potential used for the plurality of exposure times; and determining the color of the light received by the sensor pixel based on the slope.

According to some examples, the method further comprises determining, based on at least one calibration measurement in which the ToF sensor receives predetermined monochromatic light, at least one of the plurality of value ranges, at least one of the plurality of reference values, a mapping function used for determining the weights for the plurality of primary colors of the color space based on the ratio value or at least one reference slope used for determining the color of the light received by the sensor pixel based on the slope.

In some examples, the method further comprises generating a color coded image of the scene comprising a pixel representing the determined color of the light received by the sensor pixel of the ToF sensor.

According to some examples, the method further comprises scaling an intensity of the color coded image's pixel based on a sum of the first amount of charge and the second amount of charge.

In some examples, the method further comprises: causing the time-of-flight sensor to perform at least one ToF measurement of the scene for obtaining a depth image of the scene; and performing an image segmentation process on the depth image for locating one or more objects and/or one or more boundaries in the depth image, wherein the image segmentation process uses the color coded image of the scene for locating the one or more objects and/or the one or more boundaries in the depth image.

According to some examples, the method further comprises applying a third electrical potential to a third modulation gate of the sensor pixel during the exposure time, wherein the third modulation gate is arranged between the first modulation gate and the second modulation gate, and wherein the third electrical potential is between the first electrical potential and the second electrical potential.

In some examples, one of the first electrical potential and the second electrical potential is ground.

According to some examples, each of the first electrical potential and the second electrical potential is different from ground.

In some example, the first electrical potential and the second electrical potential are constant during the exposure time of the ToF sensor.

In alternative examples, a value of the first electrical potential periodically alternates between a first value and a second value during the exposure time of the ToF sensor, wherein a value the second electrical potential periodically alternates between the first value and the second value during the exposure time of the ToF sensor, and wherein the values of the first electrical potential and the second electrical potential vary inversely between the first value and the second value.

Other examples relate to an apparatus for detecting a color of light received from a scene by a ToF sensor. The apparatus comprises driver circuitry configured to apply a first electrical potential to a first modulation gate of a sensor pixel of the ToF sensor during an exposure time of the ToF sensor. Further, the driver circuitry is configured to apply a second electrical potential to a second modulation gate of the sensor pixel during the exposure time. The second electrical potential is different from the first electrical potential. The apparatus additionally comprises processing circuitry configured to receive data indicating a first amount of charge collected at a first charge storage of the sensor pixel during the exposure time and a second amount of charge collected at a second charge storage of the sensor pixel during the exposure time. The processing circuitry is further configured to determine the color of the light received by the sensor pixel based on the first amount of charge and the second amount of charge.

Examples of the present disclosure may enable color sensing with ToF imagers.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

**Claims**

1. A method (100) for detecting a color of light received from a scene by a Time-of-Flight, ToF, sensor, the method (100) comprising:

   applying (102) a first electrical potential to a first modulation gate of a sensor pixel of the ToF sensor during a plurality of exposure times of the ToF sensor, wherein a value of the first electrical potential is equal for the plurality of exposure times;
   applying (104) a second electrical potential to a second modulation gate of the sensor pixel during the plurality of exposure times, wherein the second electrical potential is different from the first electrical potential, wherein a value of the second electrical potential is different for each of the plurality of exposure times;
   receiving (106) data indicating a respective first amount of charge collected at a first charge storage of the sensor pixel during the plurality of exposure times and a respective second amount of charge collected at a second charge storage of the sensor pixel during the plurality of exposure times;
   determining for the plurality of exposure times a respective ratio value representing a ratio of the respective first amount of charge to the respective second amount of charge;
   determining a slope of a course of the determined ratio values with respect to the values of the second electrical potential used for the plurality of exposure times; and
   determining the color of the light received by the sensor pixel based on the slope.

2. The method (100) of claim 1, further comprising:
   determining, based on at least one calibration measurement in which the ToF sensor receives predetermined monochromatic light, at least one reference slope used for determining the color of the light received by the sensor pixel based on the slope.

3. The method (100) of claim 1 or claim 2, further comprising:
   generating a color coded image of the scene comprising a pixel representing the determined color of the light received by the sensor pixel of the ToF sensor.

4. The method (100) of claim 3, further comprising:
   scaling an intensity of the color coded image's pixel based on a sum of the first amount of charge and the second amount of charge.

5. The method (100) of claim 3 or claim 4, further comprising:

   causing the ToF sensor to perform at least one ToF measurement of the scene for obtaining a depth image of the scene; and
   performing an image segmentation process on the depth image for locating one or more objects and/or one or more boundaries in the depth image, wherein the image segmentation process uses the color coded image of the scene for locating the one or more objects and/or the one or more boundaries in the depth image.

**6.** The method (100) of any one of the preceding claims, further comprising:
applying a third electrical potential to a third modulation gate of the sensor pixel during the plurality of exposure times, wherein the third modulation gate is arranged between the first modulation gate and the second modulation gate, and wherein the third electrical potential is between the first electrical potential and the second electrical potential.

**7.** The method (100) of any one of the preceding claims, wherein one of the first electrical potential and the second electrical potential is ground.

**8.** The method (100) of any one of claims 1 to 6, wherein each of the first electrical potential and the second electrical potential is different from ground.

**9.** An apparatus (200) for detecting a color of light (205) received from a scene by a Time-of-Flight, ToF, sensor (240), the apparatus (200) comprising:

driver circuitry (210) configured to:

apply a first electrical potential (211) to a first modulation gate (251) of a sensor pixel (240) of the ToF sensor (250) during a plurality of exposure times of the ToF sensor (250), wherein a value of the first electrical potential is equal for the plurality of exposure times; and
apply a second electrical potential (212) to a second modulation gate (252) of the sensor pixel (240) during the plurality of exposure times, wherein the second electrical potential (212) is different from the first electrical potential (211), wherein a value of the second electrical potential is different for each of the plurality of exposure times; and

processing circuitry (220) configured to:

receive data (259) indicating a respective first amount of charge collected at a first charge storage of the sensor pixel (250) during the plurality of exposure times and a respective second amount of charge collected at a second charge storage of the sensor pixel (250) during the plurality of exposure times;
determine for the plurality of exposure times a respective ratio value representing a ratio of the respective first amount of charge to the respective second amount of charge;
determine a slope of a course of the determined ratio values with respect to the values of the second electrical potential used for the plurality of exposure times; and
determine the color of the light received by the sensor pixel based on the slope.

**Patentansprüche**

**1.** Ein Verfahren (100) zum Detektieren einer Farbe von Licht, das von einer Szene durch einen Laufzeit-, ToF-, Sensor empfangen wird, das Verfahren (100) umfassend:

Anlegen (102) eines ersten elektrischen Potenzials an ein erstes Modulations-Gate eines Sensorpixels des ToF-Sensors während einer Vielzahl von Expositionszeiten des ToF-Sensors, wobei ein Wert des ersten elektrischen Potenzials für die Vielzahl von Expositionszeiten gleich ist;
Anlegen (104) eines zweiten elektrischen Potenzials an ein zweites Modulations-Gate des Sensorpixels während der Vielzahl von Expositionszeiten, wobei sich das zweite elektrische Potenzial von dem ersten elektrischen Potenzial unterscheidet, wobei ein Wert des zweiten elektrischen Potenzials für jede der Vielzahl von Expositionszeiten unterschiedlich ist;
Empfangen (106) von Daten, die eine jeweilige erste Ladungsmenge, die an einem ersten Ladungsspeicher des Sensorpixels während der Vielzahl von Expositionszeiten gesammelt wird, und eine jeweilige zweite Ladungsmenge, die an einem zweiten Ladungsspeicher des Sensorpixels während der Vielzahl von Expositionszeiten gesammelt wird, anzeigen;
Bestimmen eines jeweiligen Verhältniswertes für die Vielzahl von Expositionszeiten, der ein Verhältnis der jeweiligen ersten Ladungsmenge zu der jeweiligen zweiten Ladungsmenge darstellt;
Bestimmen einer Steigung eines Verlaufs der bestimmten Verhältniswerte in Bezug auf die Werte des zweiten elektrischen Potenzials, die für die Vielzahl von Expositionszeiten verwendet werden; und
Bestimmen der Farbe des von dem Sensorpixel empfangenen Lichts basierend auf der Steigung.

2. Das Verfahren (100) gemäß Anspruch 1, ferner umfassend:
Bestimmen, basierend auf zumindest einer Kalibrierungsmessung, bei der der ToF-Sensor vorbestimmtes monochromatisches Licht empfängt, zumindest einer Referenzsteigung, die zum Bestimmen der Farbe des von dem Sensorpixel empfangenen Lichts basierend auf der Steigung verwendet wird.

3. Das Verfahren (100) gemäß Anspruch 1 oder Anspruch 2, ferner umfassend:
Erzeugen eines farbcodierten Bildes der Szene, umfassend ein Pixel, das die bestimmte Farbe des von dem Sensorpixel des ToF-Sensors empfangenen Lichts darstellt.

4. Das Verfahren (100) gemäß Anspruch 3, ferner umfassend:
Skalieren einer Intensität des Pixels des farbcodierten Bildes basierend auf einer Summe der ersten Ladungsmenge und der zweiten Ladungsmenge.

5. Das Verfahren (100) gemäß Anspruch 3 oder Anspruch 4, ferner umfassend:

Veranlassen des ToF-Sensors, zumindest eine ToF-Messung der Szene durchzuführen, um ein Tiefenbild der Szene zu erhalten; und
Durchführen eines Bildsegmentierungsprozesses auf dem Tiefenbild zum Lokalisieren eines oder mehrerer Objekte und/oder einer oder mehrerer Begrenzungen in dem Tiefenbild, wobei der Bildsegmentierungsprozess das farbcodierte Bild der Szene zum Lokalisieren des einen oder der mehreren Objekte und/oder der einen oder der mehreren Begrenzungen in dem Tiefenbild verwendet.

6. Das Verfahren (100) gemäß einem der vorangehenden Ansprüche, ferner umfassend:
Anlegen eines dritten elektrischen Potenzials an ein drittes Modulations-Gate des Sensorpixels während der Vielzahl von Expositionszeiten, wobei das dritte Modulations-Gate zwischen dem ersten Modulations-Gate und dem zweiten Modulations-Gate angeordnet ist und wobei das dritte elektrische Potenzial zwischen dem ersten elektrischen Potenzial und dem zweiten elektrischen Potenzial ist.

7. Das Verfahren (100) gemäß einem der vorangehenden Ansprüche, wobei eines von dem ersten elektrischen Potenzial und dem zweiten elektrischen Potenzial Masse ist.

8. Das Verfahren (100) gemäß einem der Ansprüche 1 bis 6, wobei jedes von dem ersten elektrischen Potenzial und dem zweiten elektrischen Potenzial unterschiedlich von Masse ist.

9. Eine Vorrichtung (200) zum Detektieren einer Farbe von Licht (205), das von einer Szene durch einen Laufzeit-, ToF-, Sensor (240) empfangen wird, wobei die Vorrichtung (200) umfasst:

eine Treiberschaltungsanordnung (210), die ausgebildet ist:

ein erstes elektrisches Potenzial (211) an ein erstes Modulations-Gate (251) eines Sensorpixels (240) des ToF-Sensors (250) während einer Vielzahl von Expositionszeiten des ToF-Sensors (250) anzulegen, wobei ein Wert des ersten elektrischen Potenzials für die Vielzahl von Expositionszeiten gleich ist; und
ein zweites elektrisches Potenzial (212) an ein zweites Modulations-Gate (252) des Sensorpixels (240) während der Vielzahl von Expositionszeiten anzulegen, wobei sich das zweite elektrische Potenzial (212) von dem ersten elektrischen Potenzial (211) unterscheidet, wobei ein Wert des zweiten elektrischen Potenzials für jede der Vielzahl von Expositionszeiten unterschiedlich ist; und

eine Verarbeitungsschaltungsanordnung (220), die ausgebildet ist:

Daten (259) zu empfangen, die eine jeweilige erste Ladungsmenge, die an einem ersten Ladungsspeicher des Sensorpixels (250) während der Vielzahl von Expositionszeiten gesammelt wird, und eine jeweilige zweite Ladungsmenge, die an einem zweiten Ladungsspeicher des Sensorpixels (250) während der Vielzahl von Expositionszeiten gesammelt wird, anzeigen;
für die Vielzahl von Expositionszeiten einen jeweiligen Verhältniswert, der ein Verhältnis der jeweiligen ersten Ladungsmenge zu der jeweiligen zweiten Ladungsmenge darstellt, zu bestimmen;
eine Steigung eines Verlaufs der bestimmten Verhältniswerte in Bezug auf die Werte des zweiten elektrischen Potenzials, die für die Vielzahl von Expositionszeiten verwendet werden, zu bestimmen; und
die Farbe des von dem Sensorpixel empfangenen Lichts basierend auf der Steigung zu bestimmen.

**Revendications**

1. Procédé (100) pour détecter une couleur de lumière reçue d'une scène par un capteur à temps de vol, ToF, le procédé (100) comprenant le fait de :

   appliquer (102) un premier potentiel électrique à une première porte de modulation d'un pixel de capteur du capteur ToF pendant une pluralité de durées d'exposition du capteur ToF, une valeur du premier potentiel électrique étant égale pour la pluralité de durées d'exposition ;

   appliquer (104) un deuxième potentiel électrique à une deuxième porte de modulation du pixel de capteur pendant la pluralité de durées d'exposition, le deuxième potentiel électrique étant différent du premier potentiel électrique, la valeur du deuxième potentiel électrique étant différente pour chacune de la pluralité de durées d'exposition ;

   recevoir (106) des données indiquant une première quantité de charge respective collectée dans une première mémoire de charge du pixel de capteur pendant la pluralité de durées d'exposition et une deuxième quantité de charge respective collectée dans une deuxième mémoire de charge du pixel de capteur pendant la pluralité de durées d'exposition ;

   déterminer, pour la pluralité de durées d'exposition, une valeur de rapport respective représentant un rapport entre la première quantité de charge respective et la deuxième quantité de charge respective ;

   déterminer une pente d'un course des valeurs de rapport déterminées par rapport aux valeurs du deuxième potentiel électrique utilisées pour la pluralité de durées d'exposition ; et

   déterminer la couleur de la lumière reçue par le pixel de capteur sur la base de la pente.

2. Procédé (100) selon la revendication 1, comprenant en outre le fait de :
   déterminer, sur la base d'au moins une mesure d'étalonnage au cours de laquelle le capteur ToF reçoit une lumière monochromatique prédéterminée, au moins une pente de référence utilisée pour déterminer la couleur de la lumière reçue par le pixel de capteur sur la base de la pente.

3. Procédé (100) selon la revendication 1 ou la revendication 2, comprenant en outre le fait de :
   générer une image codée en couleur de la scène comprenant un pixel représentant la couleur déterminée de la lumière reçue par le pixel de capteur du capteur ToF.

4. Procédé (100) selon la revendication 3, comprenant en outre le fait de :
   mettre à l'échelle une intensité du pixel de l'image codée en couleur sur la base d'une somme de la première quantité de charge et de la deuxième quantité de charge.

5. Procédé (100) selon la revendication 3 ou la revendication 4, comprenant en outre le fait de :

   amener le capteur ToF à effectuer au moins une mesure ToF de la scène pour obtenir une image de profondeur de la scène ; et

   effectuer un processus de segmentation d'image sur l'image de profondeur pour localiser un ou plusieurs objets et/ou une ou plusieurs limites dans l'image de profondeur, le processus de segmentation d'image utilisant l'image codée en couleur de la scène pour localiser le ou les objets et/ou la ou les limites dans l'image de profondeur.

6. Procédé (100) selon l'une des revendications précédentes, comprenant en outre le fait de :
   appliquer un troisième potentiel électrique à une troisième porte de modulation du pixel de capteur pendant la pluralité de durées d'exposition, la troisième porte de modulation étant disposée entre la première porte de modulation et la deuxième porte de modulation, et le troisième potentiel électrique étant situé entre le premier potentiel électrique et le deuxième potentiel électrique.

7. Procédé (100) selon l'une des revendications précédentes, dans lequel l'un du premier potentiel électrique et du deuxième potentiel électrique est la masse.

8. Procédé (100) selon l'une des revendications 1 à 6, dans lequel chacun du premier potentiel électrique et du deuxième potentiel électrique est différent de la masse.

9. Appareil (200) pour détecter une couleur de lumière (205) reçue d'une scène par un capteur à temps de vol, ToF, (240), l'appareil (200) comprenant :

une circuiterie d'entraînement (210) configurée pour :

appliquer un premier potentiel électrique (211) à une première porte de modulation (251) d'un pixel de capteur (240) du capteur ToF (250) pendant une pluralité de durées d'exposition du capteur ToF (250), une valeur du premier potentiel électrique étant égale pour la pluralité de durées d'exposition ; et appliquer un deuxième potentiel électrique (212) à une deuxième porte de modulation (252) du pixel de capteur (240) pendant la pluralité de durées d'exposition, le deuxième potentiel électrique (212) étant différent du premier potentiel électrique (211), une valeur du deuxième potentiel électrique étant différente pour chacune de la pluralité de durées d'exposition ; et

une circuiterie de traitement (220) configurée pour :

recevoir des données (259) indiquant une première quantité de charge respective collectée dans une première mémoire de charge du pixel de capteur (250) pendant la pluralité de durées d'exposition et une deuxième quantité de charge respective collectée dans une deuxième mémoire de charge du pixel de capteur (250) pendant la pluralité de durées d'exposition ; déterminer, pour la pluralité de durées d'exposition, une valeur de rapport respective représentant un rapport entre la première quantité de charge respective et la deuxième quantité de charge respective ; déterminer une pente d'un course des valeurs de rapport déterminées par rapport aux valeurs du deuxième potentiel électrique utilisées pour la pluralité de durées d'exposition ; et déterminer la couleur de la lumière reçue par le pixel de capteur sur la base de la pente.

100

| | |
|---|---|
| Applying a first electrical potential to a first modulation gate | 102 |
| Applying a second electrical potential to a second modulation gate | 104 |
| Receiving data | 106 |
| Determining the color of the light | 108 |

FIG. 1

FIG. 2

FIG. 3

EP 4 109 126 B1

$r_{red}$   410   $r_{green}$   420   430   $r_{blue}$

$$\frac{r_{red} + r_{green}}{2}$$

$$\frac{r_{green} + r_{blue}}{2}$$

FIG. 4

(a)

(b)

(c)

FIG. 5

FIG. 6

**FIG. 7**

EP 4 109 126 B1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006128087 A1
- US 2018115767 A1

- US 2019349536 A1